# EUROPÄISCHE PATENTANMELDUNG

(11) **EP 4 840 611 A1**
(43) Veröffentlichungstag der Anmeldung: **18.11.2026**
(21) Anmeldenummer: 26152612.3
(22) Anmeldetag: 19.01.2026
(51) Int. Cl.: B29C 45/16, B29C 45/04

(54) **SPRITZGUSSWERKZEUG**

(30) Priorität: 14.02.2025 DE 102025105516
(71) Anmelder: BSH Hausgeräte GmbH, 81739 München (DE)
(72) Erfinder: Krüger, Robert, 15732 Eichwalde (DE)

(57) **Zusammenfassung**

Die vorliegende Erfindung betrifft ein Spritzgusswerkzeug (100) zur Herstellung eines Zweikomponenten-Spritzgussteils (101), wobei ein Antrieb ein erstes Werkzeugteil (117) und ein zweites Werkzeugteil (119) während eines Einkomponenten-Spritzgussschritts eine erste Zuführeinrichtung (143) anzusteuern, wobei der Antrieb (121) weiterhin ausgebildet ist, während eines sich an den Einkomponenten-Spritzgussschritt anschließenden Verlagerungsschritts das zweite Werkzeugteil (119) gegenüber dem ersten Werkzeugteil (117) zu verlagern und wobei der Antrieb (121) weiterhin ausgebildet ist, während eines sich an den Verlagerungsschritt anschließenden Zweitkomponenten-Spritzgussschritts eine zweite Spritzgussvertiefung (137) anzusteuern.

## Beschreibung

Die vorliegende Erfindung betrifft ein Spritzgusswerkzeug, insbesondere ein Spritzgusswerkzeug zur Herstellung eines Zweikomponenten-Spritzgussteils.

**In** einem Haushaltsgerät werden oftmals Kunststoffbauteile verwendet, welche die Außenseiten eines entsprechenden Haushaltsgeräts verkleiden, und an dem Haushaltsgerät befestigt sind. Als entsprechende Kunststoffbauteile haben sich Zweikomponenten-Spritzgussteile bewährt, welche aus zwei unterschiedlichen Kunststoffen und/oder aus zwei unterschiedlich gefärbten Kunststoffen bestehen, und im Rahmen eines Spritzgussvorgangs mittels eines Spritzgusswerkzeugs hergestellt werden.

Bei bisherigen Zweikomponenten-Spritzgussteilen tritt oftmals der Nachteil auf, dass üblicherweise eine Mehrzahl von Flächen, insbesondere drei bis vier Flächen eines entsprechenden Zweikomponenten-Spritzgussteils, zur Befestigung an einem Haushaltsgerät benötigt werden, was den Freiheitsgrad bei der Flächengestaltung eines entsprechenden Zweikomponenten-Spritzgussteils einschränkt.

Es ist die der Erfindung zugrundeliegende Aufgabe, ein Spritzgusswerkzeug anzugeben, mit dem ein Zweikomponenten-Spritzgussteil herstellbar ist, welches vorteilhaft an einem Haushaltsgerät angebracht werden kann.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem ersten Aspekt wird die erfindungsgemäße Aufgabe durch ein Spritzgusswerkzeug zur Herstellung eines Zweikomponenten-Spritzgussteils gelöst, mit einem ersten Werkzeugteil, einem zweiten Werkzeugteil, und einem Antrieb, welcher ausgebildet ist, das zweite Werkzeugteil gegenüber dem ersten Werkzeugteil zu bewegen, wobei das erste Werkzeugteil an einer dem zweiten Werkzeugteil zugewandten ersten Unterseite eine erste Spritzgussvertiefung und eine zweite Spritzgussvertiefung aufweist, wobei das zweite Werkzeugteil an einer dem ersten Werkzeugteil zugewandten zweiten Oberseite eine dritte Spritzgussvertiefung und eine vierte Spritzgussvertiefung aufweist, wobei das erste Werkzeugteil eine erste Zuführeinrichtung aufweist, welche fluidtechnisch mit der ersten Spritzgussvertiefung verbunden und ausgebildet ist, eine erste flüssige Kunststoffkomponente der ersten Spritzgussvertiefung zuzuführen, wobei das zweite Werkzeugteil eine zweite Zuführeinrichtung aufweist, welche fluidtechnisch mit der zweiten Spritzgussvertiefung verbunden und ausgebildet ist, eine zweite flüssige Kunststoffkomponente der zweiten Spritzgussvertiefung zuzuführen, wobei der Antrieb ausgebildet ist, während eines Einkomponenten-Spritzgussschritts das zweite Werkzeugteil auf das erste Werkzeugteil zuzubewegen und die erste Unterseite und die zweite Oberseite bündig in Verbindung zu bringen, wobei die erste Spritzgussvertiefung des ersten Werkzeugteils und die dritte Spritzgussvertiefung des zweiten Werkzeugteils einen geschlossenen ersten Spritzgusshohlraum bilden, wobei die erste Zuführeinrichtung ausgebildet ist, während des Einkomponenten-Spritzgussschritts die erste flüssige Kunststoffkomponente der ersten Spritzgussvertiefung zuzuführen, um ein Einkomponenten-Spritzgussteil zu erhalten, welches in der dritten Spritzgussvertiefung des zweiten Werkzeugteils angeordnet ist, wobei der Antrieb ausgebildet ist, während eines sich an den Einkomponenten-Spritzgussschritt anschließenden Verlagerungsschritts das zweite Werkzeugteil gegenüber dem ersten Werkzeugteil zu verlagern, und wobei der Antrieb ausgebildet ist, während eines sich an den Verlagerungsschritt anschließenden Zweitkomponenten-Spritzgussschritts das zweite Werkzeugteil auf das erste Werkzeugteil zuzubewegen und die erste Unterseite und die zweite Oberseite bündig in Verbindung zu bringen, wobei die zweite Spritzgussvertiefung des ersten Werkzeugteils und die dritte Spritzgussvertiefung des zweiten Werkzeugteils einen geschlossenen zweiten Spritzgusshohlraum bilden, wobei die zweite Zuführeinrichtung ausgebildet ist, während des Zweitkomponenten-Spritzgussschritts die zweite flüssige Kunststoffkomponente der zweiten Spritzgussvertiefung zuzuführen, um das Zweikomponenten-Spritzgussteil zu erhalten.

Dadurch wird der technische Vorteil erreicht, dass eine vorteilhafte zweistufige Fertigung eines Zweikomponenten-Spritzgussteils erreicht wird, welches vorteilhaft an einem Haushaltsgerät angeordnet werden kann.

Hierbei wird zuerst während des Einkomponenten-Spritzgussschritts das aus der ersten flüssigen Kunststoffkomponente bestehende Einkomponenten-Spritzgussteil erhalten, welches in der dritten Spritzgussvertiefung des zweiten Werkzeugteils verbleibt. Wird das zweite Werkzeugteil nun in dem sich anschließenden Verlagerungsschritt gegenüber dem ersten Werkzeugteil verlagert, wird im Rahmen des sich anschließenden Zusammenführens des ersten und zweiten Werkzeugteils das in der dritten Spritzgussvertiefung des zweiten Werkzeugteils positionierte Einkomponenten-Spritzgussteil in den zweiten Spritzgusshohlraum überführt. Durch das während des Zweitkomponenten-Spritzgussschritts stattfindende Zuführen der zweiten flüssigen Kunststoffkomponente und dem sich anschließenden Aushärten des Kunststoffs wird das Zweikomponenten-Spritzgussteil erhalten.

Durch das Spritzgusswerkzeug gemäß der vorliegenden Offenbarung lassen sich im Vergleich zu herkömmlichen Spritzgusswerkzeugen mehr Freiheitsgrade bei der Gestaltung des Zweikomponenten-Spritzgussteils realisieren. Insbesondere können durch das Spritzgusswerkzeug gemäß der vorliegenden Offenbarung Zweikomponenten-Spritzgussteile hergestellt werden, welche fast vollständig aus Design-Flächen bestehen, da nur eine einzige Fläche des Zweikomponenten-Spritzgussteils für die Befestigung an dem Haushaltsgerät notwendig ist.

Unter einem Haushaltsgerät wird ein Gerät verstanden, das zur Haushaltsführung eingesetzt wird. Dies kann ein Haushaltsgroßgerät sein, wie beispielsweise eine Waschmaschine, ein Wäschetrockner, eine Geschirrspülmaschine. Das kann aber auch ein Haushaltskleingerät sein, wie beispielsweise ein Warmwasserbereiter, ein Kaffeevollautomat, eine Küchenmaschine oder ein Staubsauger.

**In** einer vorteilhaften Ausführungsform des Spritzgusswerkzeugs ist der Antrieb ausgebildet, während des Einkomponenten-Spritzgussschritts das zweite Werkzeugteil entlang einer ersten vertikalen Verlagerungsrichtung auf das erste Werkzeugteil zuzubewegen und die erste Unterseite und die zweite Oberseite bündig in Verbindung zu bringen.

Dadurch wird der technische Vorteil erreicht, dass aufgrund der bündigen Verbindung zwischen den beiden Werkzeugteilen die jeweiligen Spritzgussvertiefungen des jeweiligen ersten Werkzeugteils und des jeweiligen zweiten Werkzeugteils jeweils einen geschlossenen Spritzgusshohlraum bilden.

**In** einer vorteilhaften Ausführungsform des Spritzgusswerkzeugs ist der Antrieb ausgebildet, während eines sich an den Einkomponenten-Spritzgussschritt anschließenden ersten Verlagerungsschritts das zweite Werkzeugteil entlang einer der ersten vertikalen Verlagerungsrichtung entgegengesetzten zweiten vertikalen Verlagerungsrichtung von dem ersten Werkzeugteil wegzubewegen, während eines sich an den ersten Verlagerungsschritt anschließenden zweiten Verlagerungsschritts das zweite Werkzeugteil entlang einer ersten horizontalen Verlagerungsrichtung gegenüber dem ersten Werkzeugteil zu verlagern, und während des sich an den zweiten Verlagerungsschritts anschließenden Zweitkomponenten-Spritzgussschritts das erste Werkzeugteil entlang der ersten vertikalen Verlagerungsrichtung auf das erste Werkzeugteil zuzubewegen und die erste Unterseite und die zweite Oberseite bündig in Verbindung zu bringen.

Dadurch wird der technische Vorteil erreicht, dass durch die entsprechenden Verlagerungen das in der dritten Spritzgussvertiefung des zweiten Werkzeugteils positionierte Einkomponenten-Spritzgussteil wirksam für die Aufnahme in dem zweiten geschlossenen Spritzgusshohlraum positioniert werden kann.

In einer vorteilhaften Ausführungsform des Spritzgusswerkzeugs umfasst die erste horizontale Verlagerungsrichtung eine 180°-Rotation des zweiten Werkzeugteils um eine vertikale Rotationsachse, oder umfasst die erste horizontale Verlagerungsrichtung eine horizontale Verlagerung des zweiten Werkzeugteils entlang einer horizontalen Verlagerungsachse.

Dadurch wird der technische Vorteil erreicht, dass durch die entsprechende Rotation oder horizontale Verlagerung das in dem zweiten Werkzeugteil positionierte Einkomponenten-Spritzgussteil wirksam zur Aufnahme in dem zweiten geschlossenen Spritzgusshohlraum überführt werden kann.

Insbesondere erstreckt sich die vertikale Rotationsachse von der zweiten Oberseite des zweiten Werkzeugteils orthogonal zu der zweiten Oberseite. Insbesondere ist der Antrieb ausgebildet das zweite Werkzeugteil um die vertikale Rotationsachse um 180° zu drehen.

Alternativ zur beschriebenen Rotation um die vertikale Rotationsachse ist es auch möglich, dass die erste horizontalen Verlagerungsrichtung eine lineare horizontale Verlagerungsrichtung umfasst, so dass das zweite Werkzeugteil gegenüber dem ersten Werkzeugteil linear verlagert wird.

In einer vorteilhaften Ausführungsform des Spritzgusswerkzeugs weist das zweite Werkzeugteil eine Mehrzahl von bewegbaren Fixierelementen auf, welche zwischen einer Fixierposition und einer Freigabeposition verlagerbar sind, wobei die Fixierelemente ausgebildet sind, in der Fixierposition das Einkomponenten-Spritzgussteil in der dritten Spritzgussvertiefung des zweiten Werkzeugteils zu fixieren.

Dadurch wird der technische Vorteil erreicht, dass die Fixierelemente in der Fixierposition sicherstellen, dass bei einer sich an den Einkomponenten-Spritzgussschritt anschließenden Verlagerung des zweiten Werkzeugteils das Einkomponenten-Spritzgussteil nicht aus der dritten Spritzgussvertiefung herausgleiten kann.

Insbesondere sind die Fixierelemente als Schiebeelemente ausgebildet, welche an einer dem zweiten Werkzeugteil abgewandten Oberseite des Einkomponenten-Spritzgussteils anliegen, und das Einkomponenten-Spritzgussteil in der dritten Spritzgussvertiefung zu fixieren.

In einer vorteilhaften Ausführungsform des Spritzgusswerkzeugs sind die Fixierelemente ausgebildet, in der Freigabeposition das Einkomponenten-Spritzgussteil in dem zweiten Spritzgusshohlraum freizugeben, wobei insbesondere eine Fixierung des Zweikomponenten-Spritzgussteils nach einer Zuführung und Aushärtung des zweiten Kunststoffs in der zweiten Spritzgussvertiefung des ersten Werkzeugteils erreicht wird.

Dadurch wird der technische Vorteil erreicht, dass die Fixierelemente in der Freigabeposition das Einkomponenten-Spritzgussteil in dem zweiten Spritzgusshohlraum freigeben, so dass nach der Zuführung und Aushärtung des zweiten Kunststoffs das aus dem Einkomponenten-Spritzgussteil entstehende Zweikomponenten-Spritzgussteil in der zweiten Spritzgussvertiefung des ersten Werkzeugteils vorteilhaft gehalten wird.

In einer vorteilhaften Ausführungsform des Spritzgusswerkzeugs weist das erste Werkzeugteil eine Mehrzahl von bewegbaren Ausgabeelementen auf, welche während eines sich an den Zeitkomponenten-Spritzgussschritt anschließenden Ausgabeschritts in die zweite Spritzgussvertiefung verlagerbar sind, um das Zweikomponenten-Spritzgussteil aus der zweiten Spritzgussvertiefung zu entfernen.

Dadurch wird der technische Vorteil erreicht, dass durch die Ausgabeelemente das Zweikomponenten-Spritzgussteil wirksam aus der zweiten Spritzgussvertiefung entfernt werden kann.

In einer vorteilhaften Ausführungsform des Spritzgusswerkzeugs ist der Antrieb ausgebildet ist, während des Ausgabeschritts das zweite Werkzeugteil gegenüber dem ersten Werkzeugteil zu bewegen, insbesondere entlang der zweiten Vertikalrichtung, um die erste Unterseite von der zweiten Oberseite zu entfernen.

Dadurch wird der technische Vorteil erreicht, dass durch das Öffnen des Spritzgusswerkzeugs das Zweikomponenten-Spritzgussteil aus dem Zwischenraum zwischen den beiden Werkzeugteilen wirksam herausgeführt werden kann, insbesondere durch einen Roboterarm.

In einer vorteilhaften Ausführungsform des Spritzgusswerkzeugs ist der Antrieb ausgebildet, während des Zweitkomponenten-Spritzgussschritts die erste Spritzgussvertiefung des ersten Werkzeugteils und die vierte Spritzgussvertiefung des zweiten Werkzeugteils zusammenzuführen und einen geschlossenen ersten Spritzgusshohlraum zu bilden, wobei die erste Zuführeinrichtung ausgebildet ist, während des Zweitkomponenten-Spritzgussschritts die erste flüssige Kunststoffkomponente der ersten Spritzgussvertiefung zuzuführen, um ein weiteres Einkomponenten-Spritzgussteil in der vierten Spritzgussvertiefung zu erhalten.

Dadurch wird der technische Vorteil erreicht, dass während der Herstellung des Zweikomponenten-Spritzgussteils in dem zweiten geschlossenen Spritzgusshohlraum zeitgleich in dem geschlossenen ersten Spritzgusshohlraum ein weiteres Einkomponenten-Spritzgussteil hergestellt werden kann, wodurch sich die Effektivität des Spritzgusswerkzeugs erhöht.

Die Fixierung des weiteren Einkomponenten-Spritzgussteil in der vierten Spritzgussvertiefung kann durch Fixierelemente erfolgen, analog zur Fixierung des Einkomponenten-Spritzgussteils in der dritten Spritzgussvertiefung.

In einer vorteilhaften Ausführungsform des Spritzgusswerkzeugs weist das erste Werkzeugteil und/oder das zweite Werkzeugteil eine Mehrzahl von durch Kühlflüssigkeit durchströmbare Kühlkanäle auf, um das Einkomponenten-Spritzgussteil in dem ersten Spritzgusshohlraum und das Zweikomponenten-Spritzgussteil in dem zweiten Spritzgusshohlraum zu kühlen.

Dadurch wird der technische Vorteil erreicht, dass eine entsprechende Kühlung ein schnelleres Aushärten der jeweiligen flüssigen Kunststoffkomponente in dem jeweiligen Spritzgusshohlraum ermöglicht.

In einer vorteilhaften Ausführungsform des Spritzgusswerkzeugs sind die Kühlkanäle thermisch mit der ersten Spritzgussvertiefung und der zweiten Spritzgussvertiefung des ersten Werkzeugteils und/oder sind die Kühlkanäle thermisch mit der dritten Spritzgussvertiefung und der vierten Spritzgussvertiefung des zweiten Werkzeugteils gekoppelt.

Dadurch wird der technische Vorteil erreicht, dass eine besonders wirksame Wärmeabfuhr aus der jeweiligen Spritzgussvertiefung erreicht wird.

In einer vorteilhaften Ausführungsform des Spritzgusswerkzeugs weist die dritte Spritzgussvertiefung des zweiten Werkzeugteils eine Prägekontur auf, um eine zu der Prägekontur komplementäre Bauteilkontur in das Einkomponenten-Spritzgussteil in dem ersten Spritzgusshohlraum einzuführen, und/oder weist die zweite Spritzgussvertiefung des ersten Werkzeugteils eine weitere Prägekontur auf, um eine zu der weiteren Prägekontur komplementäre weitere Bauteilkontur in das Zweikomponenten-Spritzgussteil in dem zweiten Spritzgusshohlraum einzuführen.

Dadurch wird der technische Vorteil erreicht, dass durch die Prägenkontur, bzw. durch die weitere Prägenkontur wirksame Gestaltungen des Zweikomponenten-Spritzgussteils erreicht werden.

Gemäß einem zweiten Aspekt wird die erfindungsgemäße Aufgabe gelöst durch ein Verfahren zur Herstellung eines Zweikomponenten-Spritzgussteils mittels eines Spritzgusswerkzeugs, wobei das Spritzgusswerkzeug ein erstes Werkzeugteil, ein zweites Werkzeugteil, und einen Antrieb aufweist, welcher ausgebildet ist, das zweite Werkzeugteil gegenüber dem ersten Werkzeugteil zu bewegen, wobei das erste Werkzeugteil an einer dem zweiten Werkzeugteil zugewandten ersten Unterseite eine erste Spritzgussvertiefung und eine zweite Spritzgussvertiefung aufweist, wobei das zweite Werkzeugteil an einer dem ersten Werkzeugteil zugewandten zweiten Oberseite eine dritte Spritzgussvertiefung und eine vierte Spritzgussvertiefung aufweist, wobei das erste Werkzeugteil eine erste Zuführeinrichtung aufweist, welche fluidtechnisch mit der ersten Spritzgussvertiefung verbunden und ausgebildet ist, eine erste flüssige Kunststoffkomponente der ersten Spritzgussvertiefung zuzuführen, wobei das zweite Werkzeugteil eine zweite Zuführeinrichtung aufweist, welche fluidtechnisch mit der zweiten Spritzgussvertiefung verbunden und ausgebildet ist, eine zweite flüssige Kunststoffkomponente der zweiten Spritzgussvertiefung zuzuführen, wobei das Verfahren die folgenden Verfahrensschritte umfasst, Zubewegen des zweiten Werkzeugteils auf das erste Werkzeugteil durch den Antrieb und bündiges in Verbindung bringen der ersten Unterseite und der zweiten Oberseite während eines Einkomponenten-Spritzgussschritts, wobei die erste Spritzgussvertiefung des ersten Werkzeugteils und die dritte Spritzgussvertiefung des zweiten Werkzeugteils einen geschlossenen ersten Spritzgusshohlraum bilden, Zuführen der ersten flüssigen Kunststoffkomponente der ersten Spritzgussvertiefung durch die erste Zuführeinrichtung während des Einkomponenten-Spritzgussschritts, um ein Einkomponenten-Spritzgussteil zu erhalten, welches in der dritten Spritzgussvertiefung des zweiten Werkzeugteils angeordnet ist, Verlagern des zweiten Werkzeugteils gegenüber dem ersten Werkzeugteil durch den Antrieb während eines sich an den Einkomponenten-Spritzgussschritt anschließenden Verlagerungsschritts, und Zubewegen des zweiten Werkzeugteils auf das erste Werkzeugteil durch den Antrieb und bündiges in Verbindung bringen der ersten Unterseite und der zweiten Oberseite während eines sich an den Verlagerungsschritt anschließenden Zweitkomponenten-Spritzgussschritts, wobei die zweite Spritzgussvertiefung des ersten Werkzeugteils und die dritte Spritzgussvertiefung des zweiten Werkzeugteils einen geschlossenen zweiten Spritzgusshohlraum bilden, Zuführen der zweiten flüssigen Kunststoffkomponente der zweiten Spritzgussvertiefung durch die zweite Zuführeinrichtung während des Zweitkomponenten-Spritzgussschritts, um das Zweikomponenten-Spritzgussteil zu erhalten.

Dadurch wird der technische Vorteil erreicht, dass ein vorteilhafte Herstellung des Zweikomponenten-Spritzgussteils sichergestellt wird.

Gemäß einem dritten Aspekt wird die erfindungsgemäße Aufgabe gelöst durch ein Zweikomponenten-Spritzgussteil herstellbar durch ein Verfahren gemäß dem zweiten Aspekt.

In einer vorteilhaften Ausführungsform des Zweikomponenten-Spritzgussteils weist das Zweikomponenten-Spritzgussteil eine Oberseite und eine der Oberseite abgewandte Unterseite auf, wobei in der Oberseite Abdrücke des Spritzgusswerkzeugs vorhanden sind, und wobei in der Unterseite keine Abdrücke des Spritzgusswerkzeugs vorhanden sind.

Dadurch wird der technische Vorteil erreicht, dass die Unterseite des Spritzgusswerkzeugs vorteilhaft zur Ausgestaltung einer Design-Oberfläche des Haushaltsgeräts genutzt werden kann.

Die für das Spritzgusswerkzeug gemäß dem ersten Aspekt genannten Ausführungsformen sind ebenfalls Ausführungsformen für das Verfahren gemäß dem zweiten Aspekt und für das Zweikomponenten-Spritzgussteil gemäß dem dritten Aspekt, und umgekehrt.

Ausführungsbeispiele der Erfindung sind in den Zeichnungen dargestellt und werden im Folgenden näher beschrieben.

Es zeigen:
- Figs. 1A-1B: schematische Ansichten eines Zweikomponenten-Spritzgussteils gemäß einer Ausführungsform;
- Fig. 2: eine perspektivische Ansicht eines Spritzgusswerkzeugs zur Herstellung eines Zweikomponenten-Spritzgussteils gemäß einer Ausführungsform;
- Fig. 3: eine perspektivische Ansicht eines Einkomponenten-Spritzgussschritts eines Verfahrens zur Herstellung eines Zweikomponenten-Spritzgussteils mittels des in Fig. 2 dargestellten Spritzgusswerkzeugs;
- Fig. 4: eine perspektivische Ansicht eines sich an den in Fig. 3 dargestellten Einkomponenten-Spritzgussschritt anschließenden ersten Verlagerungsschritts eines Verfahrens zur Herstellung eines Zweikomponenten-Spritzgussteils mittels des in Fig. 2 dargestellten Spritzgusswerkzeugs;
- Fig. 5: eine perspektivische Ansicht eines sich an den in Fig. 4 dargestellten ersten Verlagerungsschritt anschließenden zweiten Verlagerungsschritts eines Verfahrens zur Herstellung eines Zweikomponenten-Spritzgussteils mittels des in Fig. 2 dargestellten Spritzgusswerkzeugs;
- Fig. 6: eine perspektivische Ansicht eines sich an den in Fig. 5 dargestellten zweiten Verlagerungsschritt anschließenden Zweitkomponenten-Spritzgussschritts eines Verfahrens zur Herstellung eines Zweikomponenten-Spritzgussteils mittels des in Fig. 2 dargestellten Spritzgusswerkzeugs;
- Fig. 7: eine perspektivische Ansicht eines sich an den in Fig. 6 dargestellten Zweitkomponenten-Spritzgussschritt anschließenden Ausgabeschritts eines Verfahrens zur Herstellung eines Zweikomponenten-Spritzgussteils mittels des in Fig. 2 dargestellten Spritzgusswerkzeugs; und
- Fig. 8: eine schematische Darstellung eines Verfahrens zur Herstellung eines Zweikomponenten-Spritzgussteils gemäß einer Ausführungsform.

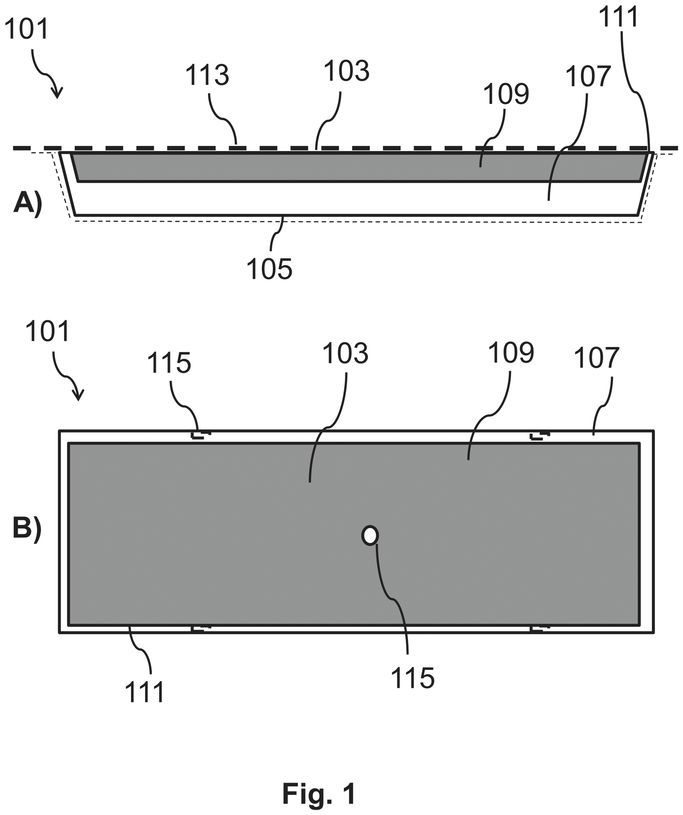

Figs. 1A-1B zeigen schematische Ansichten eines Zweikomponenten-Spritzgussteils gemäß einer Ausführungsform.

Hierbei zeigt die Fig. 1A einen Längsschnitt durch das Zweikomponenten-Spritzgussteil 101. Hierbei zeigt die Fig. 1B eine Darstellung mit Blick auf eine Oberseite 103 des Zweikomponenten-Spritzgussteils 101, welche einer Unterseite 105 des Zweikomponenten-Spritzgussteils 101 abgewandt ist.

Das Zweikomponenten-Spritzgussteil 101 wird insbesondere in einem in Fig. 1A und Fig. 1B nicht dargestellten Haushaltsgerät 100 verbaut.

Das in den Figuren 1A und 1B schematisch dargestellte Zweikomponenten-Spritzgussteil 101 besteht aus zwei unterschiedlichen Kunststoffen und/oder zwei unterschiedlich gefärbten Kunststoffen, umfassend einen ersten Kunststoff 107 und einen zweiten Kunststoff 109. Das Zweikomponenten-Spritzgussteil 101 ist durch ein nachfolgend detailliert beschriebenes Spritzgussverfahren mittels einem nachfolgend detailliert beschriebenen Spritzgusswerkzeugs 100 herstellbar.

Bei der Herstellung wird zuerst der erste Kunststoff 107 eingespritzt und ausgehärtet, um ein Einkomponenten-Spritzgussteil zu erhalten. Hierbei weist der erste Kunststoff 107 des Einkomponenten-Spritzgussteils eine Aussparung 111 auf, in welche nachfolgend der zweite Kunststoff 109 eingespritzt und ausgehärtet wird, um das in Fig. 1A und Fig. 1B dargestellte Zweikomponenten-Spritzgussteil 101 zu erhalten.

In der Fig. 1A ist ferner noch die Haupttrennebene 113 schematisch dargestellt, über welche die Oberseite 103 des Zweikomponenten-Spritzgussteils 101 mit dem in Fig. 1A und Fig. 1B nicht dargestellten Spritzgusswerkzeug 100 verbunden ist. Auf Grund der Verbindung mit dem Spritzgusswerkzeug 100 weist die Oberseite 103 des Zweikomponenten-Spritzgussteils 101 eine Vielzahl von Abdrücken 115 von Bauteilen des Spritzgusswerkzeugs 100 auf, so dass die Oberseite 103 des Zweikomponenten-Spritzgussteils 101 als technische Seite, bzw. als Nicht-Design-Seite, dem Innenraum des entsprechenden Haushaltsgeräts zugewandt ist.

Wie durch die gestrichelte Linie in Fig. 1A dargestellt ist, weist die Unterseite 105 des Zweikomponenten-Spritzgussteils 101 unterhalb der Haupttrennebene 113 keine entsprechenden Abdrücke 115 auf, und besteht daher vollständig aus einer Design-Oberfläche, welche einem Außenbereich des Haushaltsgeräts zugewandt ist.

Somit kann das Zweikomponenten-Spritzgussteil 101 gemäß der vorliegenden Offenbarung mit lediglich einer einzigen mit Abdrücken 115 versehenen Fläche zur Befestigung an dem Haushaltsgerät gefertigt werden, und alle anderen Flächen stehen als außenseitige Design-Oberflächen zu Verfügung.

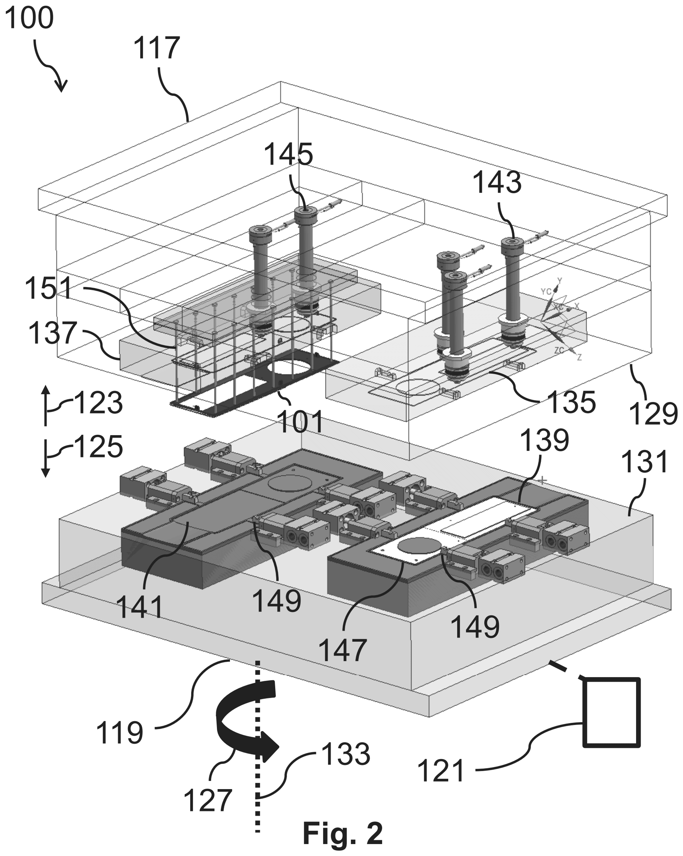

Fig. 2 zeigt eine perspektivische Ansicht eines Spritzgusswerkzeugs zur Herstellung eines Zweikomponenten-Spritzgussteils gemäß einer Ausführungsform.

Das Spritzgusswerkzeug 100 weist ein erstes Werkzeugteil 117, ein zweites Werkzeugteil 119 und einen Fig. 2 lediglich schematisch dargestellten Antrieb 121 auf, welcher ausgebildet ist, das zweite Werkzeugteil 119 gegenüber dem ersten Werkzeugteil 117 zu bewegen.

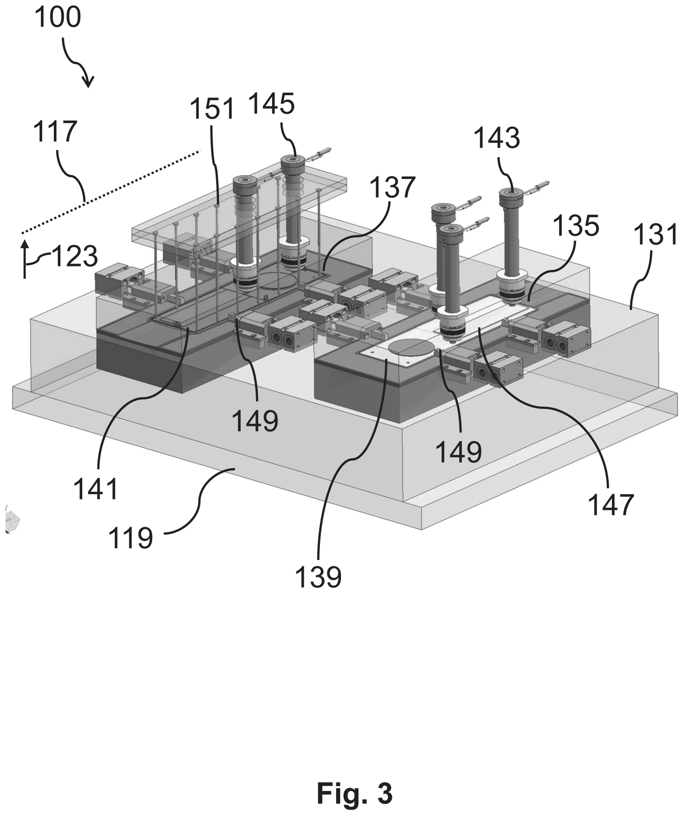

Der Antrieb 121 ist hierbei ausgebildet, das zweite Werkzeugteil 119 entlang einer ersten vertikalen Verlagerungsrichtung 123 auf das erste Werkzeugteil 117 zuzubewegen und eine erste Unterseite 129 des ersten Werkzeugteils 117 und eine zweite Oberseite 131 des zweiten Werkzeugteils 119 bündig in Verbindung zu bringen, wie dies in der nachfolgenden Fig. 3 dargestellt ist.

Der Antrieb 121 ist ferner ausgebildet ist, das zweite Werkzeugteil 119 entlang einer der ersten vertikalen Verlagerungsrichtung 123 entgegengesetzten zweiten vertikalen Verlagerungsrichtung 125 von dem ersten Werkzeugteil 117 wegzubewegen, um die in Fig. 2 dargestellte räumlich getrennte Anordnung des ersten und zweiten Werkzeugteils 117, 119 zu erhalten.

Der Antrieb 121 ist ferner ausgebildet ist, das zweite Werkzeugteil 119 entlang einer ersten horizontalen Verlagerungsrichtung 127 gegenüber dem ersten Werkzeugteil 117 zu verlagern, wobei die erste horizontale Verlagerungsrichtung 127, wie in Fig. 2 dargestellt, insbesondere eine erste horizontale Rotationsrichtung 127 umfasst, also insbesondere eine Rotation des zweiten Werkzeugteils 119 um eine in Fig. 2 lediglich schematisch dargestellte vertikale Rotationsachse 133, welche sich von der zweiten Oberseite 131 des zweiten Werkzeugteils 119 orthogonal zu der zweiten Oberseite 131 erstreckt. Insbesondere ist der Antrieb 121 ausgebildet das zweite Werkzeugteil 119 um die vertikale Rotationsachse 133 um 180° zu drehen.

Auch wenn dies in Fig. 2 nicht dargestellt ist, ist es alternativ zur beschriebenen Rotation um die vertikale Rotationsachse 133 auch möglich, dass die erste horizontale Verlagerungsrichtung 127 eine lineare horizontale Verlagerungsrichtung 127 umfasst, so dass das zweite Werkzeugteil 119 gegenüber dem ersten Werkzeugteil 117 linear verlagert wird.

Wie in der Fig. 2 ferner dargestellt ist, weist die erste Unterseite 129 des ersten Werkzeugteils 117 eine erste Spritzgussvertiefung 135 und eine zweite Spritzgussvertiefung 137 auf, und weist die zweite Oberseite 131 des zweiten Werkzeugteils 119 eine dritte Spritzgussvertiefung 139 und eine vierte Spritzgussvertiefung 141 auf.

Wenn die erste Unterseite 129 des ersten Werkzeugteils 117 bündig mit der zweiten Oberseite 131 des zweiten Werkzeugteils 119 in Verbindung gebracht ist, dann bildet die erste Spritzgussvertiefung 135 des ersten Werkzeugteils 117 und die dritte Spritzgussvertiefung 139 des zweiten Werkzeugteils 119 einen geschlossenen ersten Spritzgusshohlraum.

Das erste Werkzeugteil 117 weist ferner eine erste Zuführeinrichtung 143 auf, welche fluidtechnisch mit der ersten Spritzgussvertiefung 135 verbunden und ausgebildet ist, eine erste flüssige Kunststoffkomponente der ersten Spritzgussvertiefung 135, bzw. dem geschlossenen ersten Spritzgusshohlraum zuzuführen. Die erste Zuführeinrichtung 143 weist insbesondere drei Angussdüsen auf.

In der Fig. 2 ist ein nach dem Aushärten der ersten flüssigen Kunststoffkomponente erhaltenes Einkomponenten-Spritzgussteil 147 in der dritten Spritzgussvertiefung 139 des zweiten Werkzeugteils 119 schematisch dargestellt.

Hierbei weist das zweite Werkzeugteil 119 eine Mehrzahl, insbesondere vier, von bewegbaren Fixierelementen 149 auf, welche zwischen einer in Fig. 2 dargestellten Fixierposition und einer in Fig. 2 nicht dargestellten Freigabeposition verlagerbar sind. Wie in der Fig. 2 dargestellt ist, sind die Fixierelemente 149 ausgebildet, in der Fixierposition das Einkomponenten-Spritzgussteil 147 in der dritten Spritzgussvertiefung 139 des zweiten Werkzeugteils 119 zu fixieren.

Die in Fig. 2 dargestellten Fixierelemente 149 sind insbesondere als bewegbare Schiebeelemente ausgebildet, welche in der in Fig. 2 dargestellten Fixierposition über das Einkomponenten-Spritzgussteil 147 greifen, und das Einkomponenten-Spritzgussteil 147 in der dritten Spritzgussvertiefung 139 des zweiten Werkzeugteils 119 fixieren.

Für die sich an den Einkomponenten-Spritzgussschritt anschließende Verlagerung des zweiten Werkzeugteils 119 gegenüber dem ersten Werkzeugteil 117 und das Einspritzen einer zweiten flüssigen Kunststoffkomponente wird auf die nachfolgenden Ausführungen verwiesen.

Hierbei weist das erste Werkzeugteil 117 ferner eine zweite Zuführeinrichtung 145 auf, welche fluidtechnisch mit der zweiten Spritzgussvertiefung 137 verbunden und ausgebildet ist, eine zweite flüssige Kunststoffkomponente der zweiten Spritzgussvertiefung 137 zuzuführen. Die zweite Zuführeinrichtung 145 weist insbesondere zwei Angussdüsen auf.

Zudem weist das erste Werkzeugteil 117 eine Mehrzahl von bewegbaren Ausgabeelementen 151 auf, welche in die zweite Spritzgussvertiefung 137 verlagerbar sind, um ein Fig. 2 lediglich schematisch dargestelltes Zweikomponenten-Spritzgussteil 101 aus der zweiten Spritzgussvertiefung 137 zu entfernen.

Für weitere Details hierzu wird auf die nachfolgenden Ausführungen verwiesen.

Fig. 3 zeigt eine perspektivische Ansicht eines Einkomponenten-Spritzgussschritts eines Verfahrens zur Herstellung eines Zweikomponenten-Spritzgussteils mittels des in Fig. 2 dargestellten Spritzgusswerkzeugs.

Aus darstellungstechnischen Gründen ist in der Fig. 3 das Gehäuse des ersten Werkzeugteils 117 nur angedeutet dargestellt.

Die Fig. 3 zeigt das Spritzgusswerkzeug 100 nachdem der in Fig. 3 nicht dargestellte Antrieb 121 das zweite Werkzeugteil 119 entlang der ersten vertikalen Verlagerungsrichtung 123 auf das erste Werkzeugteil 117 zubewegt hat und die erste Unterseite 129 des ersten Werkzeugteils 117 und die zweite Oberseite 131 des zweiten Werkzeugteils 119 bündig in Verbindung gebracht hat. Hierbei bildet die erste Spritzgussvertiefung 135 des ersten Werkzeugteils 117 und die dritte Spritzgussvertiefung 139 des zweiten Werkzeugteils 119 einen geschlossenen ersten Spritzgusshohlraum.

Während des Einkomponenten-Spritzgussschritts ist die erste Zuführeinrichtung 143 ausgebildet, eine erste flüssige Kunststoffkomponente der ersten Spritzgussvertiefung 135 zuzuführen, so dass nach dem Aushärten der ersten flüssigen Kunststoffkomponente in dem geschlossenen ersten Spritzgusshohlraum ein Einkomponenten-Spritzgussteil 147 erhalten wird, welches in der Fig. 3 dargestellt ist.

Für weitere Details hierzu wird auf die Ausführungen zur Fig. 2 verwiesen.

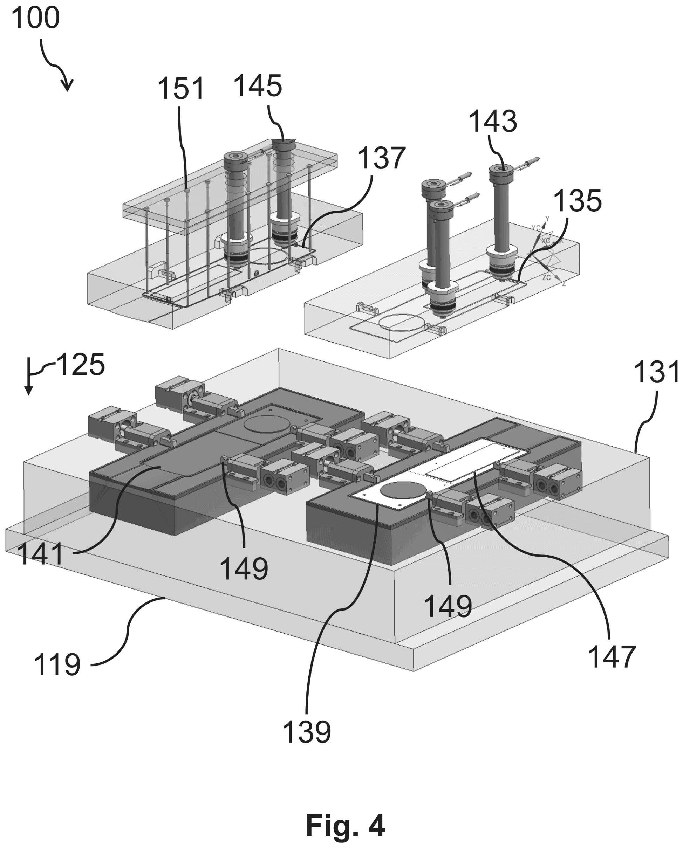

Fig. 4 zeigt eine perspektivische Ansicht eines sich an den in Fig. 3 dargestellten Einkomponenten-Spritzgussschritt anschließenden ersten Verlagerungsschritts eines Verfahrens zur Herstellung eines Zweikomponenten-Spritzgussteils mittels des in Fig. 2 dargestellten Spritzgusswerkzeugs.

Die in Fig. 4 gezeigte Darstellung entspricht im Wesentlichen der in Fig. 2 gezeigten Darstellung.

Die Fig. 4 zeigt das Spritzgusswerkzeug 100 nachdem der in Fig. 4 nicht dargestellte Antrieb 121 das zweite Werkzeugteil 119 entlang einer der ersten vertikalen Verlagerungsrichtung 123 entgegengesetzten zweiten vertikalen Verlagerungsrichtung 125 von dem ersten Werkzeugteil 117 wegbewegt hat.

Für weitere Details wird auf die Fig. 2 verwiesen.

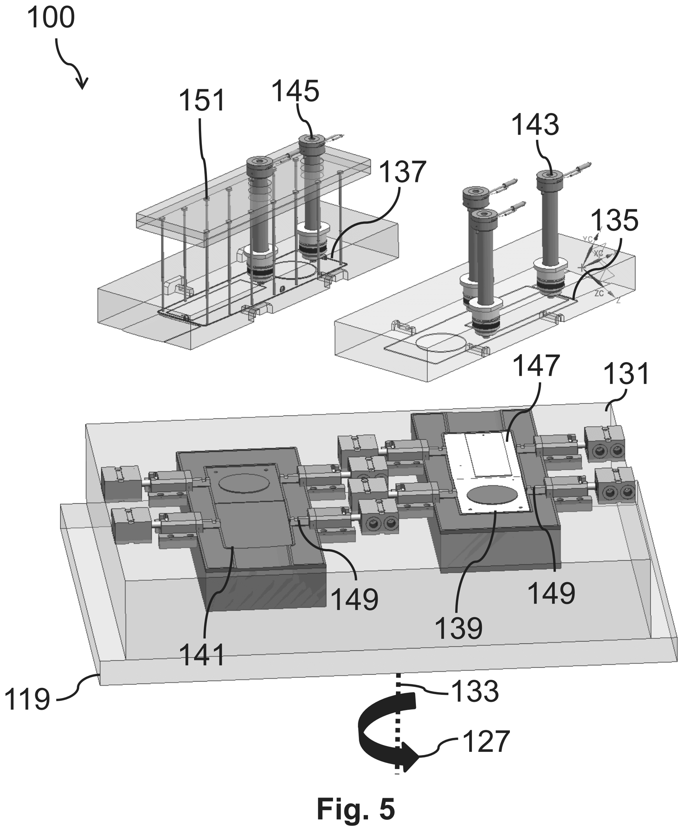

Fig. 5 zeigt eine perspektivische Ansicht eines sich an den in Fig. 4 dargestellten ersten Verlagerungsschritt anschließenden zweiten Verlagerungsschritts eines Verfahrens zur Herstellung eines Zweikomponenten-Spritzgussteils mittels des in Fig. 2 dargestellten Spritzgusswerkzeugs.

Während des zweiten Verlagerungsschritts ist der in Fig. 5 nicht dargestellte Antrieb 121 ausgebildet, das zweite Werkzeugteil 119 entlang einer ersten horizontalen Verlagerungsrichtung 127, insbesondere einer ersten horizontalen Rotationsrichtung gegenüber dem ersten Werkzeugteil 117 derart zu verlagern, dass die erste horizontale Rotationsrichtung eine 180°-Rotation des zweiten Werkzeugteils 119 um eine vertikale Rotationsachse 133 umfasst.

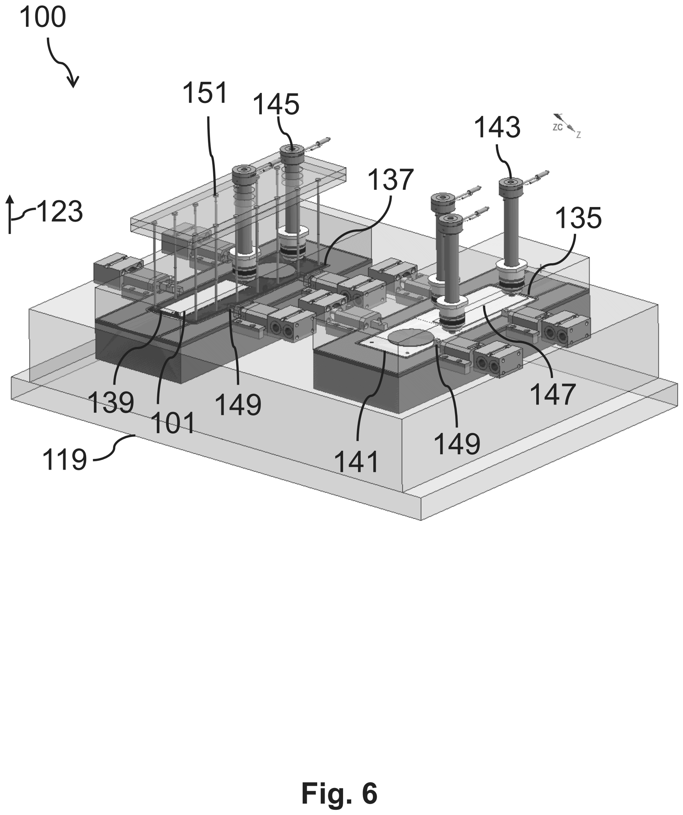

Der Endzustand der 180°-Rotation des zweiten Werkzeugteils 119 um die vertikale Rotationsachse 133 ist in der nachfolgenden Fig. 6 dargestellt.

Fig. 6 zeigt eine perspektivische Ansicht eines sich an den in Fig. 5 dargestellten zweiten Verlagerungsschritt anschließenden Zweitkomponenten-Spritzgussschritts eines Verfahrens zur Herstellung eines Zweikomponenten-Spritzgussteils mittels des in Fig. 2 dargestellten Spritzgusswerkzeugs.

Der in Fig. 5 angedeutete Rotationsvorgang hat in der Darstellung gemäß der Fig. 6 seine Endposition der 180°-Rotation des zweiten Werkzeugteils 119 um die vertikale Rotationsachse 133 erreicht. Zudem hat in der Darstellung gemäß der Fig. 6 der Antrieb 121 das zweite Werkzeugteil 119 entlang der ersten vertikale Verlagerungsrichtung 123 auf das erste Werkzeugteil 117 derart zubewegt, dass die zweite Oberseite 131 des zweiten Werkzeugteils 119 bündig an der ersten Unterseite 129 des ersten Werkzeugteils 117 anliegt.

Hierbei bildet die zweite Spritzgussvertiefung 137 des ersten Werkzeugteils 117 und die dritte Spritzgussvertiefung 139 des zweiten Werkzeugteils 119 einen geschlossenen zweiten Spritzgusshohlraum und die zweite Zuführeinrichtung 145 ist ausgebildet, während des Zweitkomponenten-Spritzgussschritts die zweite flüssige Kunststoffkomponente der zweiten Spritzgussvertiefung 137, bzw. dem geschlossenen zweiten Spritzgusshohlraum zuzuführen, um nach dem Aushärten der zweiten flüssigen Kunststoffkomponente das Zweikomponenten-Spritzgussteil 101 zu erhalten.

Hierbei werden die Fixierelemente 149, welche das Einkomponenten-Spritzgussteil 147 in der dritten Spritzgussvertiefung 139 des zweiten Werkzeugteils 119 halten in die Freigabeposition verlagert, um das Einkomponenten-Spritzgussteil 147 in der dritten Spritzgussvertiefung 139 innerhalb des geschlossenen zweiten Spritzgusshohlraums freizugeben.

Wenn nun die zweite flüssige Kunststoffkomponente der zweiten Spritzgussvertiefung 137, bzw. dem geschlossenen zweiten Spritzgusshohlraum zugeführt wird und aushärtet, dann wird das entstehende Zweikomponenten-Spritzgussteil 101 in der zweiten Spritzgussvertiefung 137 des ersten Werkzeugteils 117 gehalten.

Wie in der Fig. 6 ferner zu erkennen ist, bildet während des Zweitkomponenten-Spritzgussschritts die erste Spritzgussvertiefung 135 des ersten Werkzeugteils 117 und die vierte Spritzgussvertiefung 141 des zweiten Werkzeugteils 119 einen geschlossenen ersten Spritzgusshohlraum. Die erste Zuführeinrichtung 143 ist hierbei ausgebildet, während des Zweitkomponenten-Spritzgussschritts die erste flüssige Kunststoffkomponente der erste Spritzgussvertiefung 135 zuzuführen, um ein weiteres Einkomponenten-Spritzgussteil 147 zu erhalten. Dadurch kann die Effektivität der Herstellung von Zweikomponenten-Spritzgussteilen 101 mit dem Spritzgusswerkzeug 100 verbessert werden.

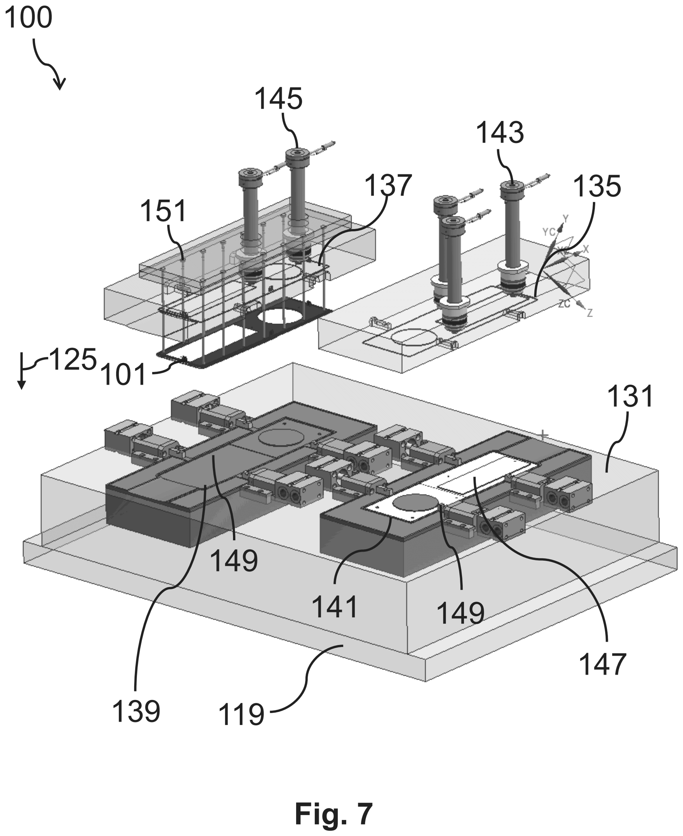

Fig. 7 zeigt eine perspektivische Ansicht eines sich an den in Fig. 6 dargestellten Zweitkomponenten-Spritzgussschritt anschließenden Ausgabeschritts eines Verfahrens zur Herstellung eines Zweikomponenten-Spritzgussteils mittels des in Fig. 2 dargestellten Spritzgusswerkzeugs.

Während des Ausgabeschritts verlagert der Antrieb 121 das zweite Werkzeugteil 119 gegenüber dem ersten Werkzeugteil 117 entlang der zweiten vertikalen Verlagerungsrichtung 125, so dass sich das Spritzgusswerkzeug 100 öffnet.

Hierbei wird das Zweikomponenten-Spritzgussteil 101 bei gelösten Fixierelementen 149 nach dem Spritzgussvorgang, beispielsweise aufgrund der auftretenden Schrumpfung, in der zweiten Spritzgussvertiefung 137 des ersten Werkzeugteils 117 gehalten.

Das erste Werkzeugteil 117 weist hierbei eine Mehrzahl von bewegbaren Ausgabeelementen 151 auf, welche während des Ausgabeschritts in die zweite Spritzgussvertiefung 137 verlagerbar sind, um das Zweikomponenten-Spritzgussteil 101 aus der zweiten Spritzgussvertiefung 137 zu entfernen. Hierbei kann beispielsweise ein in Fig. 7 nicht dargestellter Roboterarm das aus der zweiten Spritzgussvertiefung 137 durch die Ausgabeelemente 151 herausgelöste Zweikomponenten-Spritzgussteil 101 aufnehmen, und dieses beispielsweise auf einem Lagerplatz anordnen.

Anschließend kommt es erneut zu einer in Fig. 7 nicht dargestellten Rotation des zweiten Werkzeugteils 119 gegenüber dem ersten Werkzeugteil 117 derart, dass das in Fig. 7 dargestellte weitere Einkomponenten-Spritzgussteil 147 in den zweiten geschlossenen Spritzgussraum überführt wird, und nach einem weiteren Zweitkomponenten-Spritzgussschritt ein weiteres Zweikomponenten-Spritzgussbauteil 101 erhalten wird.

Ferner kann das erste Werkzeugteil 117 und/oder das zweite Werkzeugteil 119 eine Mehrzahl von durch Kühlflüssigkeit durchströmbare und in den Figuren nicht dargestellte Kühlkanäle aufweisen, um das Einkomponenten-Spritzgussteil 147 in dem ersten Spritzgusshohlraum und das Zweikomponenten-Spritzgussteil 101 in dem zweiten Spritzgusshohlraum zu kühlen. Die Kühlkanäle sind insbesondere thermisch mit der ersten Spritzgussvertiefung 135 und der zweiten Spritzgussvertiefung 137 des ersten Werkzeugteils 117 und/oder mit der dritten Spritzgussvertiefung 139 und der vierten Spritzgussvertiefung 141 des zweiten Werkzeugteils 119 gekoppelt.

Ferner kann wie in den Figuren dargestellt die dritte Spritzgussvertiefung 139 des zweiten Werkzeugteils 119 eine Prägekontur aufweisen, um eine zu der Prägekontur komplementäre Bauteilkontur in das Einkomponenten-Spritzgussteil 147 in dem ersten geschlossenen Spritzgusshohlraum einzuführen, und/oder kann die zweite Spritzgussvertiefung 137 des ersten Werkzeugteils 117 eine weitere Prägekontur aufweisen, um eine zu der weiteren Prägekontur komplementäre weitere Bauteilkontur in das Zweikomponenten-Spritzgussteil 101 in dem zweiten geschlossenen Spritzgusshohlraum einzuführen.

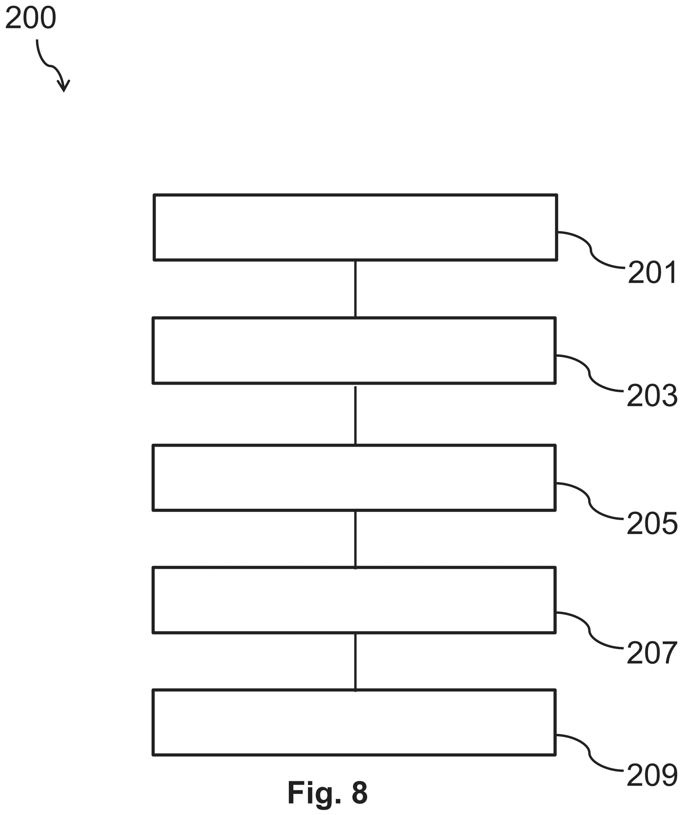

Fig. 8 zeigt eine schematische Darstellung eines Verfahrens zur Herstellung eines Zweikomponenten-Spritzgussteils gemäß einer Ausführungsform.

Das Verfahren 200 umfasst als ersten Verfahrensschritt das Zubewegen 201 des zweiten Werkzeugteils 119 auf das erste Werkzeugteil 117 durch den Antrieb 121 und bündiges in Verbindung bringen der ersten Unterseite 129 und der zweiten Oberseite 131 während eines Einkomponenten-Spritzgussschritts, wobei die erste Spritzgussvertiefung 135 des ersten Werkzeugteils 117 und die dritte Spritzgussvertiefung 139 des zweiten Werkzeugteils 119 einen geschlossenen ersten Spritzgusshohlraum bilden.

Das Verfahren 200 umfasst als zweiten Verfahrensschritt das Zuführen 203 der ersten flüssigen Kunststoffkomponente der ersten Spritzgussvertiefung 135 durch die erste Zuführeinrichtung 143 während des Einkomponenten-Spritzgussschritts, um ein Einkomponenten-Spritzgussteil 147 in der dritten Spritzgussvertiefung 139 des zweiten Werkzeugteils 119 zu erhalten.

Das Verfahren 200 umfasst als dritten Verfahrensschritt das Verlagern 205 des zweiten Werkzeugteils 119 gegenüber dem ersten Werkzeugteil 117 durch den Antrieb 121 während eines sich an den Einkomponenten-Spritzgussschritt anschließenden Verlagerungsschritts.

Das Verfahren 200 umfasst als vierten Verfahrensschritt das Zubewegen 207 des zweiten Werkzeugteils 119 auf das erste Werkzeugteil 117 durch den Antrieb 121 und bündiges in Verbindung bringen der ersten Unterseite 129 und der zweiten Oberseite 131 während eines sich an den Verlagerungsschritt anschließenden Zweitkomponenten-Spritzgussschritts, wobei die zweite Spritzgussvertiefung 137 des ersten Werkzeugteils 117 und die dritte Spritzgussvertiefung 139 des zweiten Werkzeugteils 119 einen geschlossenen zweiten Spritzgusshohlraum bilden.

Das Verfahren 200 umfasst als fünften Verfahrensschritt das Zuführen 209 der zweiten flüssigen Kunststoffkomponente der zweiten Spritzgussvertiefung 137 durch die zweite Zuführeinrichtung 145 während des Zweitkomponenten-Spritzgussschritts, um das Zweikomponenten-Spritzgussteil 101 zu erhalten.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Spritzgusswerkzeug
- 101: Zweikomponenten-Spritzgussteil
- 103: Oberseite des Zweikomponenten-Spritzgussteils
- 105: Unterseite des Zweikomponenten-Spritzgussteils
- 107: Erster Kunststoff
- 109: Zweiter Kunststoff
- 111: Aussparung
- 113: Haupttrennebene
- 115: Abdruck
- 117: Erstes Werkzeugteil
- 119: Zweites Werkzeugteil
- 121: Antrieb
- 123: Erste vertikale Verlagerungsrichtung
- 125: Zweite vertikale Verlagerungsrichtung
- 127: Erste horizontale Verlagerungsrichtung
- 129: Erste Unterseite des ersten Werkzeugteils
- 131: Zweite Oberseite des zweiten Werkzeugteils
- 133: Vertikale Rotationsachse
- 135: Erste Spritzgussvertiefung des ersten Werkzeugteils
- 137: Zweite Spritzgussvertiefung des ersten Werkzeugteils
- 139: Dritte Spritzgussvertiefung des zweiten Werkzeugteils
- 141: Vierte Spritzgussvertiefung des zweiten Werkzeugteils
- 143: Erste Zuführeinrichtung
- 145: Zweite Zuführeinrichtung
- 147: Einkomponenten-Spritzgussteil
- 149: Fixierelement
- 151: Ausgabeelement
- 200: Verfahren zur Herstellung eines Zweikomponenten-Spritzgussteils
- 201: Verfahrensschritt: Zubewegen des zweiten Werkzeugteils auf das erste Werkzeugteil
- 203: Verfahrensschritt: Zuführen der ersten flüssigen Kunststoffkomponente
- 205: Verfahrensschritt: Verlagern des zweiten Werkzeugteils
- 207: Verfahrensschritt: Verlagern des zweiten Werkzeugteils
- 209: Verfahrensschritt: Zuführen der zweiten flüssigen Kunststoffkomponente

## Patentansprüche

1. Spritzgusswerkzeug (100) zur Herstellung eines Zweikomponenten-Spritzgussteils (101), mit einem ersten Werkzeugteil (117), einem zweiten Werkzeugteil (119), und einem Antrieb (121), welcher ausgebildet ist, das zweite Werkzeugteil (119) gegenüber dem ersten Werkzeugteil (117) zu bewegen, wobei das erste Werkzeugteil (117) an einer dem zweiten Werkzeugteil (119) zugewandten ersten Unterseite (129) eine erste Spritzgussvertiefung (135) und eine zweite Spritzgussvertiefung (137) aufweist, wobei das zweite Werkzeugteil (119) an einer dem ersten Werkzeugteil (117) zugewandten zweiten Oberseite (131) eine dritte Spritzgussvertiefung (139) und eine vierte Spritzgussvertiefung (141) aufweist, wobei das erste Werkzeugteil (117) eine erste Zuführeinrichtung (143) aufweist, welche fluidtechnisch mit der ersten Spritzgussvertiefung (135) verbunden und ausgebildet ist, eine erste flüssige Kunststoffkomponente der ersten Spritzgussvertiefung (135) zuzuführen, wobei das zweite Werkzeugteil (119) eine zweite Zuführeinrichtung (145) aufweist, welche fluidtechnisch mit der zweiten Spritzgussvertiefung (137) verbunden und ausgebildet ist, eine zweite flüssige Kunststoffkomponente der zweiten Spritzgussvertiefung (137) zuzuführen,
**dadurch gekennzeichnet, dass**
der Antrieb (121) ausgebildet ist, während eines Einkomponenten-Spritzgussschritts das zweite Werkzeugteil (119) auf das erste Werkzeugteil (117) zuzubewegen und die erste Unterseite (129) und die zweite Oberseite (131) bündig in Verbindung zu bringen, wobei die erste Spritzgussvertiefung (135) des ersten Werkzeugteils (117) und die dritte Spritzgussvertiefung (139) des zweiten Werkzeugteils (119) einen geschlossenen ersten Spritzgusshohlraum bilden, wobei die erste Zuführeinrichtung (143) ausgebildet ist, während des Einkomponenten-Spritzgussschritts die erste flüssige Kunststoffkomponente der ersten Spritzgussvertiefung (135) zuzuführen, um ein Einkomponenten-Spritzgussteil (147) zu erhalten, welches in der dritten Spritzgussvertiefung (139) des zweiten Werkzeugteils (119) angeordnet ist, dass
der Antrieb (121) ausgebildet ist, während eines sich an den Einkomponenten-Spritzgussschritt anschließenden Verlagerungsschritts das zweite Werkzeugteil (119) gegenüber dem ersten Werkzeugteil (117) zu verlagern, und dass
der Antrieb (121) ausgebildet ist, während eines sich an den Verlagerungsschritt anschließenden Zweitkomponenten-Spritzgussschritts das zweite Werkzeugteil (119) auf das erste Werkzeugteil (117) zu zubewegen und die erste Unterseite (129) und die zweite Oberseite (131) bündig in Verbindung zu bringen, wobei die zweite Spritzgussvertiefung (137) des ersten Werkzeugteils (117) und die dritte Spritzgussvertiefung (139) des zweiten Werkzeugteils (119) einen geschlossenen zweiten Spritzgusshohlraum bilden, wobei die zweite Zuführeinrichtung (145) ausgebildet ist, während des Zweitkomponenten-Spritzgussschritts die zweite flüssige Kunststoffkomponente der zweiten Spritzgussvertiefung (137) zuzuführen, um das Zweikomponenten-Spritzgussteil (101) zu erhalten.

2. Spritzgusswerkzeug (100) nach Anspruch 1, **dadurch gekennzeichnet, dass** der Antrieb (121) ausgebildet ist, während des Einkomponenten-Spritzgussschritts das zweite Werkzeugteil (119) entlang einer ersten vertikalen Verlagerungsrichtung (123) auf das erste Werkzeugteil (117) zuzubewegen und die erste Unterseite (129) und die zweite Oberseite (131) bündig in Verbindung zu bringen.

3. Spritzgusswerkzeug (100) nach Anspruch 1 oder 2, **dadurch gekennzeichnet, dass** der Antrieb (121) ausgebildet ist, während eines sich an den Einkomponenten-Spritzgussschritt anschließenden ersten Verlagerungsschritts das zweite Werkzeugteil (119) entlang einer der ersten vertikalen Verlagerungsrichtung (123) entgegengesetzten zweiten vertikalen Verlagerungsrichtung (125) von dem ersten Werkzeugteil (117) wegzubewegen, während eines sich an den ersten Verlagerungsschritt anschließenden zweiten Verlagerungsschritts das zweite Werkzeugteil (119) entlang einer ersten horizontalen Verlagerungsrichtung (127) gegenüber dem ersten Werkzeugteil (117) zu verlagern, und während des sich an den zweiten Verlagerungsschritt anschließenden Zweitkomponenten-Spritzgussschritts das erste Werkzeugteil (117) entlang der ersten vertikalen Verlagerungsrichtung (123) auf das erste Werkzeugteil (117) zuzubewegen und die erste Unterseite (129) und die zweite Oberseite (131) bündig in Verbindung zu bringen.

4. Spritzgusswerkzeug (100) nach Anspruch 3, **dadurch gekennzeichnet, dass** die erste horizontale Verlagerungsrichtung (127) eine 180°-Rotation des zweiten Werkzeugteils (119) um eine vertikale Rotationsachse (133) umfasst, oder dass die erste horizontale Verlagerungsrichtung (127) eine horizontale Verlagerung des zweiten Werkzeugteils (119) entlang einer horizontalen Verlagerungsachse umfasst.

5. Spritzgusswerkzeug (100) nach einem der vorangehenden Ansprüche, **dadurch gekennzeichnet, dass** das zweite Werkzeugteil (119) eine Mehrzahl von bewegbaren Fixierelementen (149) aufweist, welche zwischen einer Fixierposition und einer Freigabeposition verlagerbar sind, wobei die Fixierelemente (149) ausgebildet sind, in der Fixierposition das Einkomponenten-Spritzgussteil in der dritten Spritzgussvertiefung (139) des zweiten Werkzeugteils (119) zu fixieren.

6. Spritzgusswerkzeug (100) nach Anspruch 5, **dadurch gekennzeichnet, dass** die Fixierelemente (149) ausgebildet sind, in der Freigabeposition das Einkomponenten-Spritzgussteil in dem zweiten Spritzgusshohlraum freizugeben, wobei insbesondere eine Fixierung des Zweikomponenten-Spritzgussteils (101) nach einer Zuführung und Aushärtung des zweiten Kunststoffs in der zweiten Spritzgussvertiefung (137) des ersten Werkzeugteils (117) erreicht wird.

7. Spritzgusswerkzeug (100) nach einem der vorangehenden Ansprüche, **dadurch gekennzeichnet, dass** das erste Werkzeugteil (117) eine Mehrzahl von bewegbaren Ausgabeelementen (151) aufweist, welche während eines sich an den Zeitkomponenten-Spritzgussschritts anschließenden Ausgabeschritts in die zweite Spritzgussvertiefung (137) verlagerbar sind, um das Zweikomponenten-Spritzgussteil (101) aus der zweiten Spritzgussvertiefung (137) zu entfernen.

8. Spritzgusswerkzeug (100) nach Anspruch 7, **dadurch gekennzeichnet, dass** der Antrieb (121) ausgebildet ist, während des Ausgabeschritts das zweite Werkzeugteil (119) gegenüber dem ersten Werkzeugteil (117) zu bewegen, insbesondere entlang der zweiten Vertikalrichtung, um die erste Unterseite (129) von der zweiten Oberseite (131) zu entfernen.

9. Spritzgusswerkzeug (100) nach einem der vorangehenden Ansprüche, **dadurch gekennzeichnet, dass** der Antrieb (121) ausgebildet ist, während des Zweitkomponenten-Spritzgussschritts die erste Spritzgussvertiefung (135) des ersten Werkzeugteils (117) und die vierte Spritzgussvertiefung (141) des zweiten Werkzeugteils (119) zusammenzuführen und einen geschlossenen ersten Spritzgusshohlraum zu bilden, wobei die erste Zuführeinrichtung (143) ausgebildet ist, während des Zweitkomponenten-Spritzgussschritts die erste flüssige Kunststoffkomponente der erste Spritzgussvertiefung (135) zuzuführen, um ein weiteres Einkomponenten-Spritzgussteil (147) in der vierten Spritzgussvertiefung (141) zu erhalten.

10. Spritzgusswerkzeug (100) nach einem der vorangehenden Ansprüche, **dadurch gekennzeichnet, dass** das erste Werkzeugteil (117) und/oder das zweite Werkzeugteil (119) eine Mehrzahl von durch Kühlflüssigkeit durchströmbare Kühlkanäle aufweist, um das Einkomponenten-Spritzgussteil (147) in dem ersten Spritzgusshohlraum und das Zweikomponenten-Spritzgussteil (101) in dem zweiten Spritzgusshohlraum zu kühlen.

11. Spritzgusswerkzeug (100) nach Anspruch 10, **dadurch gekennzeichnet, dass** die Kühlkanäle thermisch mit der ersten Spritzgussvertiefung (135) und der zweiten Spritzgussvertiefung (137) des ersten Werkzeugteils (117) und/oder dass die Kühlkanäle thermisch mit der dritten Spritzgussvertiefung (139) und der vierten Spritzgussvertiefung (141) des zweiten Werkzeugteils (119) gekoppelt sind.

12. Spritzgusswerkzeug (100) einem der vorangehenden Ansprüche, **dadurch gekennzeichnet, dass** die dritte Spritzgussvertiefung (139) des zweiten Werkzeugteils (119) eine Prägekontur aufweist, um eine zu der Prägekontur komplementäre Bauteilkontur in das Einkomponenten-Spritzgussteil (147) in dem ersten Spritzgusshohlraum einzuführen, und/oder dass die zweite Spritzgussvertiefung (137) des ersten Werkzeugteils (117) eine weitere Prägekontur aufweist, um eine zu der weiteren Prägekontur komplementäre weitere Bauteilkontur in das Zweikomponenten-Spritzgussteil (101) in dem zweiten Spritzgusshohlraum einzuführen.

13. Verfahren zur Herstellung eines Zweikomponenten-Spritzgussteils (101) mittels eines Spritzgusswerkzeugs (100), wobei das Spritzgusswerkzeug (100) ein erstes Werkzeugteil (117), ein zweites Werkzeugteil (119), und einen Antrieb (121) aufweist, welcher ausgebildet ist, das zweite Werkzeugteil (119) gegenüber dem ersten Werkzeugteil (117) zu bewegen, wobei das erste Werkzeugteil (117) an einer dem zweiten Werkzeugteil (119) zugewandten ersten Unterseite (129) eine erste Spritzgussvertiefung (135) und eine zweite Spritzgussvertiefung (137) aufweist, wobei das zweite Werkzeugteil (119) an einer dem ersten Werkzeugteil (117) zugewandten zweiten Oberseite (131) eine dritte Spritzgussvertiefung (139) und eine vierte Spritzgussvertiefung (141) aufweist, wobei das erste Werkzeugteil (117) eine erste Zuführeinrichtung (143) aufweist, welche fluidtechnisch mit der ersten Spritzgussvertiefung (135) verbunden und ausgebildet ist, eine erste flüssige Kunststoffkomponente der ersten Spritzgussvertiefung (135) zuzuführen, wobei das zweite Werkzeugteil (119) eine zweite Zuführeinrichtung (145) aufweist, welche fluidtechnisch mit der zweiten Spritzgussvertiefung (137) verbunden und ausgebildet ist, eine zweite flüssige Kunststoffkomponente der zweiten Spritzgussvertiefung (137) zuzuführen,
**dadurch gekennzeichnet, dass** das Verfahren die folgenden Verfahrensschritte umfasst,
Zubewegen (201) des zweiten Werkzeugteils (119) auf das erste Werkzeugteil (117) durch den Antrieb (121) und bündiges in Verbindung bringen der ersten Unterseite (129) und der zweiten Oberseite (131) während eines Einkomponenten-Spritzgussschritts, wobei die erste Spritzgussvertiefung (135) des ersten Werkzeugteils (117) und die dritte Spritzgussvertiefung (139) des zweiten Werkzeugteils (119) einen geschlossenen ersten Spritzgusshohlraum bilden,
Zuführen (203) der ersten flüssigen Kunststoffkomponente der ersten Spritzgussvertiefung (135) durch die erste Zuführeinrichtung (143) während des Einkomponenten-Spritzgussschritts, um ein Einkomponenten-Spritzgussteil (147) zu erhalten, welches in der dritten Spritzgussvertiefung (139) des zweiten Werkzeugteils (119) angeordnet ist,
Verlagern (205) des zweiten Werkzeugteils (119) gegenüber dem ersten Werkzeugteil (117) durch den Antrieb (121) während eines sich an den Einkomponenten-Spritzgussschritt anschließenden Verlagerungsschritts, und
Zubewegen (207) des zweiten Werkzeugteils (119) auf das erste Werkzeugteil (117) durch den Antrieb (121) und bündiges in Verbindung bringen der ersten Unterseite (129) und der zweiten Oberseite (131) während eines sich an den Verlagerungsschritt anschließenden Zweitkomponenten-Spritzgussschritts, wobei die zweite Spritzgussvertiefung (137) des ersten Werkzeugteils (117) und die dritte Spritzgussvertiefung (139) des zweiten Werkzeugteils (119) einen geschlossenen zweiten Spritzgusshohlraum bilden,
Zuführen (209) der zweiten flüssigen Kunststoffkomponente der zweiten Spritzgussvertiefung (137) durch die zweite Zuführeinrichtung (145) während des Zweitkomponenten-Spritzgussschritts, um das Zweikomponenten-Spritzgussteil (101) zu erhalten.

14. Zweikomponenten-Spritzgussteil (101) herstellbar durch ein Verfahren gemäß dem Anspruch 13.

15. Zweikomponenten-Spritzgussteil (101) nach Anspruch 14, wobei das Zweikomponenten-Spritzgussteil (101) eine Oberseite (103) und eine der Oberseite (103) abgewandte Unterseite (105), wobei in der Oberseite (103) Abdrücke (115) des Spritzgusswerkzeugs (100) vorhanden sind, und wobei in der Unterseite (105) keine Abdrücke (115) des Spritzgusswerkzeugs (100) vorhanden sind.
